(19)

Europäisches Patentamt
European Patent Office
Office européen des brevets

(11) EP 4 576 280 A1

(12) **DEMANDE DE BREVET EUROPEEN**

(43) Date de publication:
**25.06.2025 Bulletin 2025/26**

(21) Numéro de dépôt: **24220347.9**

(22) Date de dépôt: **16.12.2024**

(51) Classification Internationale des Brevets (IPC):
*H01M 8/0267 (2016.01)*    *H01M 8/04029 (2016.01)*
*H01M 8/04089 (2016.01)*    *H01M 8/241 (2016.01)*
*H01M 8/2483 (2016.01)*    *H01M 8/10 (2016.01)*

(52) Classification Coopérative des Brevets (CPC):
**H01M 8/0267; H01M 8/04029; H01M 8/04089;
H01M 8/241; H01M 8/2483;** H01M 2008/1095

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **18.12.2023 FR 2314434**

(71) Demandeur: **Commissariat à l'Energie Atomique
et aux Energies
Alternatives
75015 Paris (FR)**

(72) Inventeur: **MORIN, Arnaud
38054 Grenoble cedex 09 (FR)**

(74) Mandataire: **Brevalex
Tour Trinity
1 B Place de la Défense
92400 Courbevoie (FR)**

(54) **PILE A COMBUSTIBLE COMPORTANT UN EMPILEMENT DE CELLULES ELECTROCHIMIQUES ET PLUSIEURS COLLECTEURS D'ENTREE ET DE SORTIE POUR CHAQUE FLUIDE REACTIF ET POUR LE FLUIDE CALOPORTEUR**

(57) L'invention porte sur une pile à combustible dont les plaques bipolaires des cellules électrochimiques comportent deux collecteurs d'entrée pour chaque fluide réactif et pour le fluide caloporteur, ainsi que les collecteurs de sortie associés. Les collecteurs d'entrée et de sortie sont agencés de sorte qu'il y ait une alternance du sens d'écoulement du fluide caloporteur et de chaque fluide réactif d'une plaque bipolaire à l'autre.

Fig.3

**Description**

**DOMAINE TECHNIQUE**

Le domaine de l'invention est celui des piles à combustible, comportant un empilement de cellules électrochimiques, dont les plaques bipolaires sont traversées par des collecteurs d'entrée et de sortie assurant la circulation des fluides réactifs et du fluide caloporteur et l'évacuation des produits de la réaction électrochimique.

**ÉTAT DE LA TECHNIQUE ANTÉRIEURE**

Une pile à combustible comporte habituellement un empilement de cellules électrochimiques dont chacune comprend une anode et une cathode séparées l'une de l'autre par un électrolyte. Les cellules sont le lieu d'une réaction électrochimique entre deux fluides réactifs introduits de manière continue.

D'une manière générale, le fluide combustible (par ex. l'hydrogène) est apporté à l'anode, alors que le fluide comburant (par ex. l'oxygène contenu dans de l'air) est amené à la cathode. La réaction électrochimique est subdivisée en deux demi-réactions, une réaction d'oxydation et une réaction de réduction, qui ont lieu respectivement entre l'anode et l'électrolyte et entre la cathode et l'électrolyte. Pour avoir lieu, la réaction électrochimique requiert la présence d'un conducteur ionique entre les deux électrodes, à savoir l'électrolyte par exemple contenu dans une membrane polymère, et un conducteur électronique formé par le circuit électrique externe. L'empilement de cellules est ainsi le lieu de la réaction électrochimique : les fluides réactifs doivent y être apportés, les produits et les espèces non réactives doivent en être évacués, tout comme la chaleur produite lors de la réaction.

Les cellules électrochimiques sont habituellement séparées les unes des autres par des plaques bipolaires qui assurent l'interconnexion électrique entre elles ainsi que l'écoulement des fluides réactifs et du fluide caloporteur. Les plaques bipolaires comportent une face anodique au niveau de laquelle est formé un circuit de distribution de l'hydrogène, et une face cathodique opposée au niveau de laquelle est formé un circuit de distribution de l'oxygène. Chaque circuit de distribution prend la forme d'un réseau de canaux agencés pour amener le fluide réactif à l'électrode correspondante. Les plaques bipolaires peuvent également comporter un circuit de refroidissement formé d'un réseau de conduits internes qui assurent l'écoulement d'un fluide caloporteur, permettant d'évacuer la chaleur produite localement lors de la réaction électrochimique par la cellule. Les circuits de distribution et de refroidissement sont superposés les uns aux autres, et définissent une zone dite active des cellules électrochimiques.

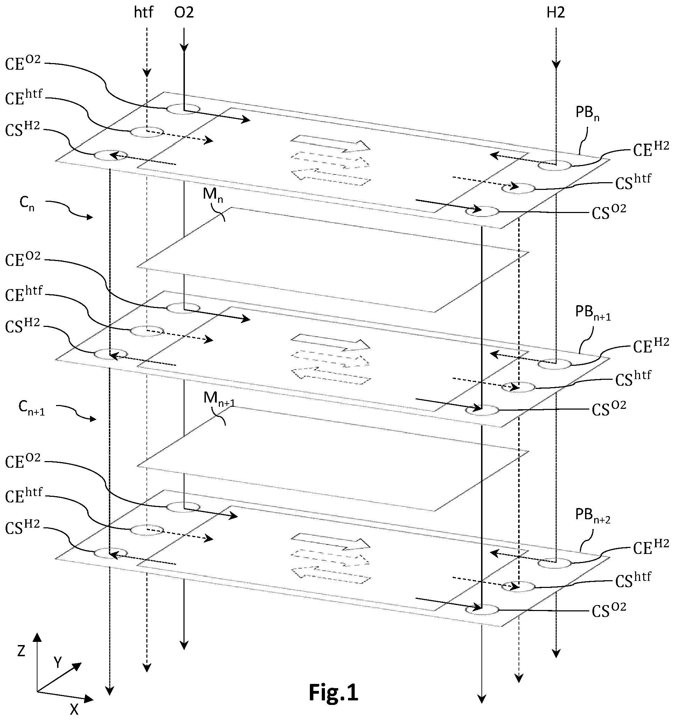

La figure 1 est une vue schématique et partielle, en perspective et en éclaté, d'un empilement de cellules électrochimiques d'une pile à combustible, selon un exemple de l'art antérieur. La pile à combustible comporte N cellules électrochimiques, avec N>1. Les plaques bipolaires successives sont référencées par l'indice n, allant de 1 à N+1.

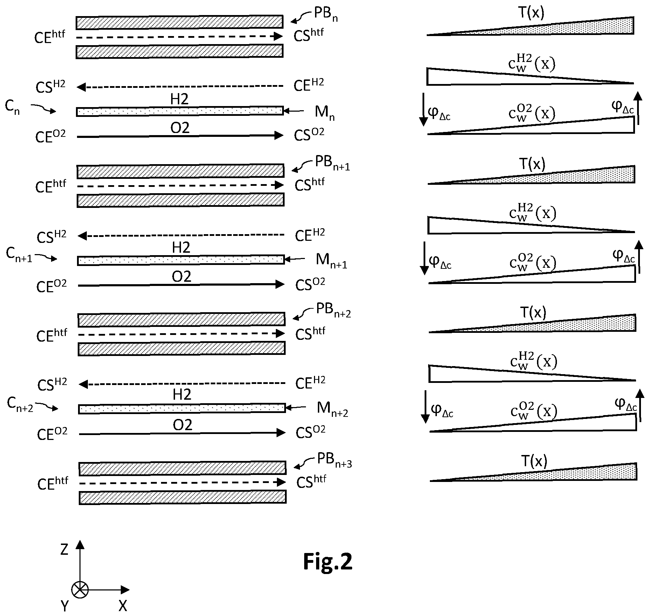

La figure 2 gauche est une vue schématique et partielle, en coupe transversale, de l'empilement de cellules électrochimiques de la fig.1. La figure 2 droite illustre un exemple de variation de la température du fluide caloporteur le long du circuit de refroidissement des plaques bipolaires de la fig.2 gauche, ainsi qu'un exemple de variation de la concentration d'eau dans les fluides s'écoulant dans les circuits de distribution des plaques bipolaires. Dans les figures, on indique, à titre illustratif et par simplicité, « $H_2$ » et « $O_2$ » pour faire référence aux fluides qui circulent dans les circuits de distribution.

Les circuits de distribution et de refroidissement sont raccordés à des collecteurs d'entrée et de sortie. Les collecteurs prennent la forme d'ouvertures qui traversent l'empilement de cellules électrochimiques, et plus précisément l'empilement de plaques bipolaires.

Ainsi, chaque circuit de distribution anodique est raccordé au même collecteur d'entrée $CE^{H2}$ de l'hydrogène et au même collecteur de sortie $CS^{H2}$. De même, les circuits de distribution cathodique sont raccordés au même collecteur d'entrée $CE^{O2}$ de l'oxygène et au même collecteur de sortie $CS^{O2}$, et les circuits de refroidissement sont raccordés au même collecteur d'entrée $CE^{htf}$ en fluide caloporteur (*heat transfer fluid*, en anglais) et au même collecteur de sortie $CS^{htf}$.

Les collecteurs d'entrée $CE^{H2}$, $CE^{O2}$ des fluides réactifs et les collecteurs de sortie associés $CS^{H2}$, $CS^{O2}$ sont situés de part et d'autre de la zone active suivant un axe longitudinal principal X des circuits de distribution. Les collecteurs d'entrée $CE^{htf}$ et de sortie $CS^{htf}$ du fluide caloporteur sont également situés ici de part et d'autre des circuits de refroidissement suivant l'axe longitudinal principal X (donc situés du côté des collecteurs d'entrée et de sortie des fluides réactifs).

Les collecteurs d'entrée $CE^{H2}$, $CE^{O2}$ et de sortie $CS^{H2}$, $CS^{O2}$ des fluides réactifs peuvent être disposés de sorte que, dans chaque cellule électrochimique $C_n$, l'hydrogène et l'oxygène s'écoulent en contre-courant de part et d'autre de la membrane électrolytique $M_n$. Ainsi, le collecteur d'entrée $CE^{H2}$ de l'hydrogène et le collecteur d'entrée $CE^{O2}$ de l'oxygène sont disposés de manière opposée suivant l'axe longitudinal principal X vis-à-vis des circuits de distribution.

Par ailleurs, la concentration d'eau $c_w^{H2}$ et $c_w^{O2}$ dans les fluides augmente le long des circuits de distribution anodique et cathodique. Aussi, du fait que les fluides réactifs s'écoulent en contre-courant de part et d'autre de la membrane se traduit par la formation d'un gradient transversal de concentration d'eau, en particulier à l'entrée et à la sortie de la zone active, générant ainsi un flux transverse d'eau $\varphi_{\Delta c}$ par diffusion au travers de la membrane électrolytique. Ainsi, il y a un flux transverse d'eau $\varphi_{\Delta c}$ de la sortie cathodique où le fluide contient une forte concentration d'eau $c_w^{O2}$ vers l'entrée anodique où le fluide contient une faible concentration d'eau $c_w^{H2}$. Et il y a un flux transverse d'eau $\varphi_{\Delta c}$ de la sortie anodique où le fluide contient une forte concentration d'eau $c_w^{H2}$ vers l'entrée cathodique où le fluide contient une faible concentration d'eau $c_w^{O2}$. Le flux transverse d'eau $\varphi_{\Delta c}$ dépend de la position x le long des circuits de distribution. Sur les figures, les flèches associées à $\varphi_{\Delta c}$ sont positionnées au niveau des extrémités des circuits de distribution, là où le flux est particulièrement important, mais il peut être plus ou moins important le long des circuits de distribution.

Cette configuration permet d'augmenter l'hydratation de la membrane électrolytique, en particulier à l'entrée et à la sortie de la zone active, ce qui contribue à améliorer les performances des cellules électrochimiques. En effet, il est connu que la conductivité ionique de la membrane électrolytique diminue fortement lorsque la concentration d'eau (par ex. l'humidité relative) dans les fluides s'écoulant dans les circuits de distribution diminue.

Cependant, il existe un besoin d'être en mesure d'améliorer davantage les performances d'une telle pile à combustible.

## EXPOSÉ DE L'INVENTION

L'invention a pour objectif de proposer une pile à combustible dont les performances améliorées. Pour cela, l'objet de l'invention est une pile à combustible comportant :

  ○ un empilement de N cellules électrochimiques, avec N>1 ; où chaque cellule électrochimique comporte une membrane électrolytique disposée entre deux plaques bipolaires les plaques bipolaires successives étant identifiées par un rang n allant de 1 à N+1 ; et où chaque plaque bipolaire comporte un circuit de distribution d'un fluide réactif comburant, un circuit de distribution d'un fluide réactif combustible, et un circuit de refroidissement d'un fluide caloporteur ;
  ○ des collecteurs d'entrée des fluides réactifs et du fluide caloporteur, et des collecteurs de sortie associés, les collecteurs d'entrée et de sortie traversant les plaques bipolaires et étant raccordés aux circuits de distribution et de refroidissement ; où les collecteurs d'entrée et de sortie sont agencés de sorte que, dans chaque cellule électrochimique, les fluides réactifs comburant et combustible s'écoulent à contre-courant de part et d'autre de la membrane électrolytique.

Selon l'invention, la pile à combustible comprend :

  ○ des premier et deuxième collecteurs d'entrée du fluide réactif comburant, et des premier et deuxième collecteurs de sortie associés ;

  ○ des premier et deuxième collecteurs d'entrée du fluide réactif combustible, et des premier et deuxième collecteurs de sortie associés ; et

  ○ des premier et deuxième collecteurs d'entrée du fluide caloporteur, et des premier et deuxième collecteurs de sortie associés.

De plus, les premiers collecteurs d'entrée alimentent uniquement les plaques bipolaires de rang n impair ; et les deuxièmes collecteurs d'entrée alimentent uniquement les plaques bipolaires de rang n pair.

Par ailleurs, dans chaque plaque bipolaire : les premier et deuxième collecteurs d'entrée du fluide caloporteur sont opposés l'un à l'autre vis-à-vis du circuit de refroidissement, de sorte qu'il y a une alternance du sens d'écoulement du fluide caloporteur d'une plaque bipolaire à l'autre.

Enfin, dans chaque plaque bipolaire : les premier et deuxième collecteurs d'entrée du fluide réactif comburant sont opposés l'un à l'autre vis-à-vis du circuit de distribution, et les premier et deuxième collecteurs d'entrée du fluide réactif combustible sont opposés l'un à l'autre vis-à-vis du circuit de distribution, de sorte qu'il y a une alternance du sens d'écoulement de chaque fluide réactif d'une plaque bipolaire à l'autre.

Certains aspects préférés mais non limitatifs de cette pile à combustible sont les suivants.

Dans chaque plaque bipolaire, le premier collecteur d'entrée du fluide combustible peut être opposé au deuxième collecteur d'entrée du fluide comburant vis-à-vis des circuits de distribution.

Dans chaque plaque bipolaire, les premiers collecteurs d'entrée des fluides réactifs peuvent être opposés aux deuxièmes collecteurs d'entrée des fluides réactifs vis-à-vis des circuits de distribution.

Le premier collecteur d'entrée du fluide caloporteur peut être situé du même côté que les premiers collecteurs d'entrée des fluides réactifs, le deuxième collecteur d'entrée du fluide caloporteur étant situé du même côté que les deuxièmes collecteurs d'entrée des fluides réactifs, de sorte que les premier et deuxième collecteurs d'entrée du fluide caloporteur sont opposés l'un à l'autre vis-à-vis du circuit de refroidissement.

Le premier collecteur d'entrée du fluide caloporteur peut être situé du même côté que les deuxième collecteurs d'entrée des fluides réactifs, le deuxième collecteur d'entrée du fluide caloporteur étant situé du même côté que les premiers collecteurs d'entrée des fluides réactifs, de sorte que les premier et deuxième collecteurs d'entrée du fluide caloporteur sont opposés l'un à l'autre vis-à-vis du circuit de refroidissement.

Chaque membrane électrolytique peut être une membrane échangeuse de protons ou une membrane échangeuse d'anions.

L'invention porte également sur un procédé d'utilisation de la pile à combustible selon l'une quelconque des caractéristiques précédentes, dans lequel une température nominale de fonctionnement des cellules électrochimiques est supérieure ou égale à 80°C.

Les fluides réactifs introduits dans les circuits de distribution peuvent présenter une humidité relative inférieure ou égale à 30%.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1, déjà décrite, est une vue schématique et partielle, en perspective et en éclaté, d'un empilement de cellules électrochimiques d'une pile à combustible selon un exemple de l'art antérieur ;

la figure 2 gauche est une vue schématique et partielle, en coupe transversale, de l'empilement de cellules électrochimiques illustré sur la fig.1 ;

la figure 2 droite illustre un exemple de variation de la température du fluide caloporteur dans le circuit de refroidissement des plaques bipolaires de la fig.2 gauche, ainsi qu'un exemple de variations de la concentration d'eau dans les fluides s'écoulant dans les circuits de distribution des plaques bipolaires ;

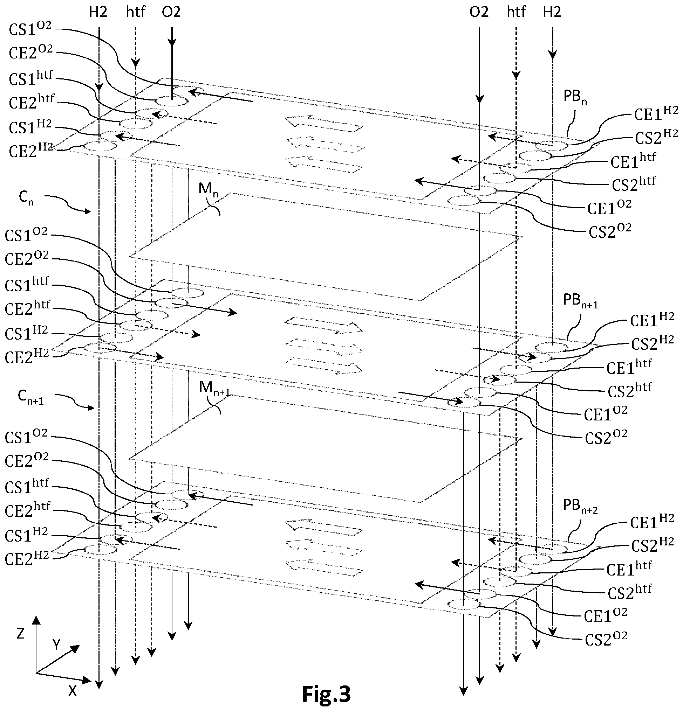

la figure 3 est une vue schématique et partielle, en perspective et en éclaté, d'un empilement de cellules électrochimiques d'une pile à combustible selon un mode de réalisation ;

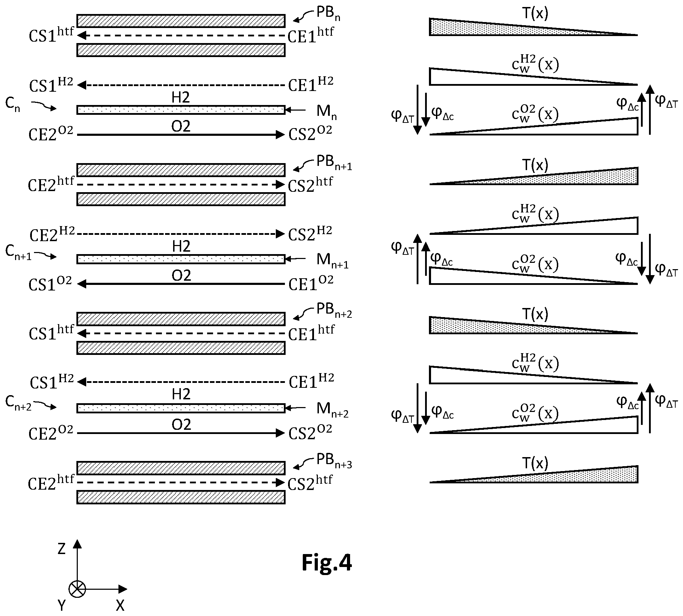

la figure 4 gauche est une vue schématique et partielle, en coupe transversale, de l'empilement de cellules électrochimiques illustré sur la fig.3 ;

la figure 4 droite illustre un exemple de variation de la température du fluide caloporteur dans le circuit de refroidissement des plaques bipolaires de la fig.4 gauche, ainsi qu'un exemple de variations de la concentration d'eau dans les fluides s'écoulant dans les circuits de distribution des plaques bipolaires ;

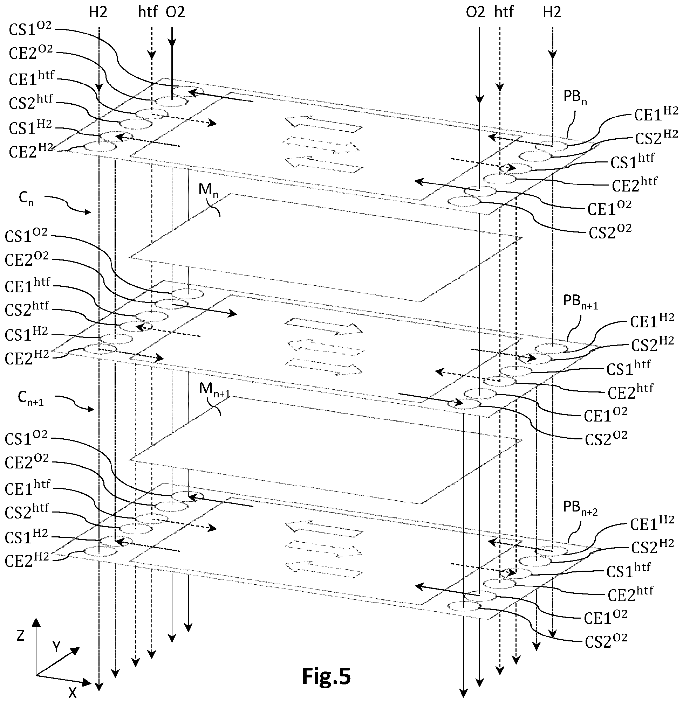

la figure 5 est une vue schématique et partielle, en perspective et en éclaté, d'un empilement de cellules électrochimiques d'une pile à combustible selon un mode de réalisation ;

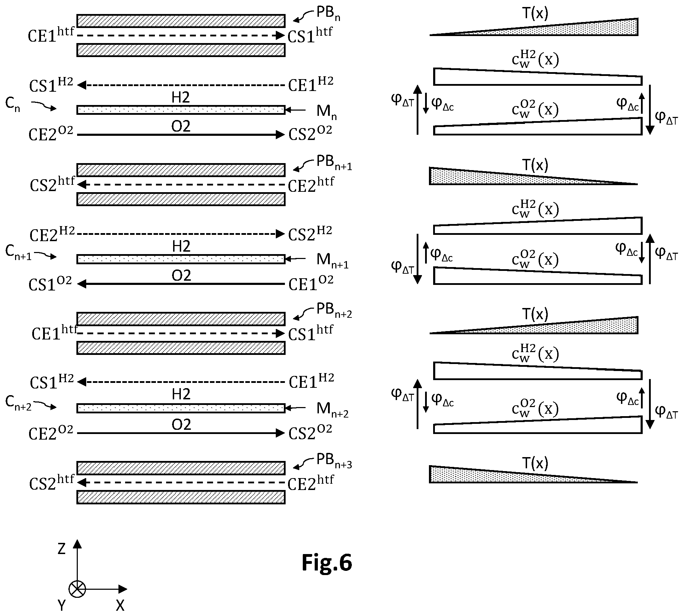

la figure 6 gauche est une vue schématique et partielle, en coupe transversale, de l'empilement de cellules électrochimiques illustré sur la fig.5 ;

la figure 6 droite illustre un exemple de variation de la température du fluide caloporteur dans le circuit de refroidissement des plaques bipolaires de la fig.6 gauche, ainsi qu'un exemple de variations de la concentration d'eau dans les fluides s'écoulant dans les circuits de distribution des plaques bipolaires.

## EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte sur une pile à combustible formée d'un empilement de cellules électrochimiques, connectées en série entre elles par des plaques bipolaires. Les plaques bipolaires sont traversées par plusieurs collecteurs (*manifolds* en anglais) d'entrée et de sortie permettant d'alimenter les circuits de distribution et de refroidissement en fluides réactifs et en fluide caloporteur.

Selon l'invention, la pile à combustible comporte plusieurs collecteurs d'entrée par fluide réactif et plusieurs collecteurs de sortie associés, ainsi que plusieurs collecteurs d'entrée pour le fluide caloporteur et plusieurs collecteurs de sortie associés. Les collecteurs d'entrée sont agencés de sorte que les fluides réactifs s'écoulent en contre-courant au sein d'une même cellule électrochimique de part et d'autre de la membrane électrolytique, et de sorte qu'il y a alternance du sens d'écoulement de chaque fluide réactif et du fluide caloporteur d'une plaque bipolaire à l'autre.

Cette configuration permet de former un gradient transversal de température $\Delta T$ au sein de chaque cellule électrochimique, en particulier à l'entrée et à la sortie de la zone active, se traduisant par un flux transverse d'eau $\varphi_{\Delta T}$ par diffusion au travers de la membrane électrolytique en direction de la plaque bipolaire la plus froide. Ce flux transverse d'eau $\varphi_{\Delta T}$ est d'origine thermique et se distingue ainsi du flux transverse d'eau $\varphi_{\Delta c}$ généré par le gradient transversal de concentration. Le flux transverse d'eau $\varphi_{\Delta T}$ dépend de la position x le long des circuits de distribution. Sur les figures, les flèches associées à $\varphi_{\Delta T}$ sont positionnées au niveau des extrémités des circuits de distribution, là où le flux est particulièrement important, mais il peut être plus ou moins important le long des circuits de distribution.

Ce flux transverse d'eau $\varphi_{\Delta T}$ d'origine thermique peut alors être mis à profit pour augmenter l'hydratation de la membrane électrolytique. En effet, grâce à ce flux transverse d'eau $\varphi_{\Delta T}$, une partie plus importante de l'eau présente en sortie d'un circuit de distribution (où la concentration d'eau est élevée) diffuse au travers de la membrane électrolytique vers l'entrée du circuit de distribution opposé (où la concentration d'eau est faible). On humidifie ainsi davantage l'entrée du circuit de distribution, ce qui permet d'augmenter l'hydratation de la membrane électrolytique. Autrement dit, on conserve une quantité d'eau plus importante dans chaque cellule électrochimique, ce qui peut permet de dé-contraindre le système d'humidification des fluides réactifs, voire de s'en passer totalement. Ceci est particulièrement intéressant lorsque la température nominale de fonctionnement de la pile à combustible est élevée (par ex. au moins 80°C). Il est alors possible d'alimenter les circuits de distribution avec des fluides réactifs relativement secs et/ou faire fonctionner la pile à combustible à une température nominale de fonctionnement plus élevée.

En variante, ce flux transverse d'eau $\varphi_{\Delta T}$ peut également être mis à profit pour réduire la concentration d'eau en entrée des circuits de distribution dans le cas où la pile à combustible serait à dénoyer.

On décrira différents modes de réalisation et variantes en référence à une pile à combustible, et en particulier à une pile à combustible de type PEM (pour *Proton Exchange Membrane*, en anglais) dont la cathode est alimentée en oxygène (par ex. contenu dans l'air) et l'anode en hydrogène. L'invention s'applique cependant à tout type de pile à combustible, en particulier à celles fonctionnant à basse température, c'est-à-dire à une température inférieure à 200°C. Elle peut s'appliquer ainsi aux piles à combustible de type AEM (pour *Anion Exchange Membrane*, en anglais).

La figure 3 est une vue schématique et partielle, en coupe transversale et en éclaté, d'un l’empilement de cellules électrochimiques d'une pile à combustible selon un mode de réalisation. Comme précédemment, la pile à combustible comporte N cellules électrochimiques, avec N>1. Les plaques bipolaires successives sont référencées par l'indice n allant de 1 à N+1. Notons que les N cellules peut être l'ensemble ou seulement une partie des cellules électrochimiques de la pile à combustible. Quoi qu'il en soit, les N cellules électrochimiques sont connectées en série par les plaques bipolaires successives.

On définit ici et pour la suite de la description un repère orthogonal direct XYZ, où le plan XY est parallèle aux plaques bipolaires et aux membranes électrolytiques, l'axe X étant orienté suivant l'axe longitudinal principal d'écoulement des fluides réactifs, l'axe Y étant orienté suivant la largeur des plaques bipolaires, et l'axe Z étant orienté suivant l'axe d'empilement des cellules électrochimiques.

Les cellules électrochimiques comportent chacune une anode et une cathode, séparées l'une de l'autre par une membrane électrolytique, formant ainsi un assemblage membrane électrodes. L'anode, la membrane et la cathode sont des éléments classiques connus de l'homme du métier et ne sont donc pas décrites en détail. L'AME s'étend de manière parallèle au plan XY.

Chaque assemblage membrane électrodes est séparé de celui des cellules adjacentes par des plaques bipolaires. Ainsi, comme l'illustre la fig.3, la cellule électrochimique $C_n$ comporte les plaques bipolaires $PB_n$ et $PB_{n+1}$ entre lesquelles se situe la membrane électrolytique $M_n$. Cette représentation est évidemment schématique : on ne représente pas ici les anodes et cathodes, ni les couches de diffusion de gaz. De plus, la membrane électrolytique peut présenter une surface plus importante et venir jusqu'en bordure des plaques bipolaires.

Chaque plaque bipolaire comporte une face anodique, où se situe un circuit de distribution anodique destiné à amener le fluide combustible, ici de l'hydrogène, au contact de l'anode d'une cellule électrochimique, et une face cathodique opposée, où se situe un circuit de distribution cathodique destiné à amener le fluide comburant, ici de l'oxygène contenu dans l'air, au contact de la cathode de la cellule électrochimique adjacente. Les circuits de distribution permettent également d'évacuer les produits issus des réactions électrochimiques et les espèces non réactives.

Par ailleurs, les plaques bipolaires comportent chacune un circuit de refroidissement, situé entre les circuits de distribution anodique et cathodique, dans lequel s'écoule un fluide caloporteur, de manière à permettre l'évacuation de la chaleur produite lors du fonctionnement de la pile à combustible.

Les circuits de distribution et de refroidissement s'étendent entre une entrée et une sortie opposées l'une à l'autre suivant l'axe longitudinal principal X, en regard desquelles suivant l'axe X se situent les collecteurs d'entrée et de sortie des fluides réactifs et du fluide caloporteur.

Les collecteurs d'entrée et de sortie sont des ouvertures qui traversent l'empilement des cellules électrochimiques, et plus précisément l'empilement des plaques bipolaires. Ils sont destinés à alimenter les circuits de distribution en les deux fluides réactifs, et les circuits de refroidissement en le fluide caloporteur. Chaque collecteur traverse verticalement les plaques bipolaires.

Les collecteurs des fluides réactifs sont adjacents les uns aux autres (séparés ici par le collecteur du fluide caloporteur), et sont disposés en regard d'une même ouverture (entrée ou sortie) de la zone active.

Selon l'invention, la pile à combustible comporte :

- des premier et deuxième collecteurs d'entrée $CE1^{O2}$, $CE2^{O2}$ du fluide réactif comburant (ici $O_2$), et des premier et deuxième collecteurs de sortie

CS1$^{O2}$, CS2$^{O2}$ associés ;

- des premier et deuxième collecteurs d'entrée CE1$^{H2}$, CE2$^{H2}$ du fluide réactif combustible (ici H$_2$), et des premier et deuxième collecteurs de sortie CS1$^{H2}$, CS2$^{H2}$ associés ; et

- des premier et deuxième collecteurs d'entrée CE1$^{htf}$, CE2$^{htf}$ du fluide caloporteur, et des premier et deuxième collecteurs de sortie CS1$^{htf}$, CS2$^{htf}$ associés.

De plus, les premiers collecteurs d'entrée CE1$^{H2}$, CE1$^{O2}$, CE$^{htf}$ n'alimentent que les plaques bipolaires d'indice n impair (i.e. PB$_1$, PB$_3$, PB$_5$,...) et non pas les plaques bipolaires d'indice n pair (i.e. PB$_2$, PB$_4$, PB$_6$,...). De plus, les deuxièmes collecteurs d'entrée CE1$^{H2}$, CE1$^{O2}$, CE$^{htf}$ n'alimentent que les plaques bipolaires d'indice n pair (i.e. PB$_2$, PB$_4$, PB$_6$,...), et non pas les plaques bipolaires d'indice n impair (i.e. PB$_1$, PB$_3$, PB$_5$,...).

Autrement dit, les premiers collecteurs CE1$^{H2}$ et CS1$^{H2}$ ne sont raccordés qu'aux circuits de distribution anodiques des plaques bipolaires d'indice n impair, alors que les deuxièmes collecteurs CE2$^{H2}$ et CS2$^{H2}$ ne sont raccordés qu'aux circuits de distribution anodiques des plaques bipolaires d'indice n pair. De même, les premiers collecteurs CE1$^{O2}$ et CS1$^{O2}$ ne sont raccordés qu'aux circuits de distribution cathodiques des plaques bipolaires d'indice n impair, alors que les deuxièmes collecteurs CE2$^{O2}$ et CS2$^{O2}$ ne sont raccordés qu'aux circuits de distribution cathodiques des plaques bipolaires d'indice n pair. Enfin, les premiers collecteurs CE1$^{htf}$ et CS1$^{htf}$ ne sont raccordés qu'aux circuits de refroidissement des plaques bipolaires d'indice n impair, alors que les deuxièmes collecteurs CE2$^{htf}$ et CS2$^{htf}$ ne sont raccordés qu'aux circuits de refroidissement des plaques bipolaires d'indice n pair.

De plus, les collecteurs d'entrée CE1$^{htf}$, CE2$^{htf}$ et de sortie CS1$^{htf}$, CS2$^{htf}$ associés au fluide caloporteur sont agencés de sorte que le sens d'écoulement du fluide caloporteur alterne d'une plaque bipolaire à l'autre. Cela permet de générer ce gradient transversal (orienté suivant l'axe Z) de température ΔT non nul au sein de chaque cellule électrochimique, en particulier à l'entrée et à la sortie de la zone active.

Pour cela, dans chaque plaque bipolaire, le premier collecteur d'entrée CE1$^{htf}$ est opposé au deuxième collecteur d'entrée CE2$^{htf}$ vis-à-vis de la zone active, et donc vis-à-vis du circuit de refroidissement. Ainsi, comme illustré sur la fig.3, le fluide caloporteur s'écoule dans les plaques bipolaires PB$_n$ et PB$_{n+2}$ suivant la direction -X, à partir du collecteur d'entrée CE1$^{htf}$ jusqu'au collecteur de sortie CS1$^{htf}$, et s'écoule dans la plaque bipolaire PB$_{n+i}$ suivant la direction +X, à partir du collecteur d'entrée CE2$^{htf}$ jusqu'au collecteur de sortie CS2$^{htf}$.

Par ailleurs, les collecteurs d'entrée CE1$^{H2}$, CE2$^{H2}$, CE1$^{O2}$, CE2$^{O2}$ et de sortie CS1$^{H2}$, CS2$^{H2}$, CS1$^{O2}$, CS2$^{O2}$ des fluides réactifs sont agencés de sorte que, dans chaque cellule électrochimique, les fluides réactifs s'écoulent en contre-courant de part et d'autre de la membrane électrolytique.

Ainsi, comme l'illustre la fig.3, au sein de la cellule électrochimique C$_n$ : le premier collecteur d'entrée CE1$^{H2}$ alimente le circuit de distribution anodique de la plaque bipolaire PB$_n$ en hydrogène, et le deuxième collecteur d'entrée CE2$^{O2}$ alimente le circuit de distribution cathodique de la plaque bipolaire PB$_{n+i}$ en oxygène.

Pour que les fluides réactifs s'écoulent en contre-courant, le premier collecteur d'entrée CE1$^{H2}$ est opposé au deuxième collecteur d'entrée CE2$^{O2}$ vis-à-vis de la zone active, et donc des circuits de distribution respectifs. C'est le cas dans chaque plaque bipolaire des cellules électrochimiques.

Par ailleurs, les collecteurs d'entrée CE1$^{H2}$, CE2$^{H2}$, CE1$^{O2}$, CE2$^{O2}$ et de sortie CS1$^{H2}$, CS2$^{H2}$, CS1$^{O2}$, CS2$^{O2}$ des fluides réactifs sont également agencés de sorte que le sens d'écoulement de chaque fluide réactif alterne d'une plaque bipolaire à l'autre.

Ainsi, comme l'illustre la fig.3, l'hydrogène s'écoule ici suivant la direction -X dans le circuit de distribution anodique de la plaque bipolaire PB$_n$, suivant la direction +X dans la plaque bipolaire PB$_{n+1}$, suivant la direction -X dans la plaque bipolaire PB$_{n+2}$, etc. De même, l'oxygène s'écoule suivant la direction -X dans le circuit de distribution cathodique de la plaque bipolaire PB$_n$, suivant la direction +X dans la plaque bipolaire PB$_{n+1}$, suivant la direction -X dans la plaque bipolaire PB$_{n+2}$, etc.

Pour cela, au sein de chaque plaque bipolaire, le premier collecteur d'entrée CE1$^{H2}$ d'hydrogène est opposé au deuxième collecteur d'entrée CE2$^{H2}$ d'hydrogène vis-à-vis de la zone active, et donc du circuit de distribution anodique. De même, le premier collecteur d'entrée CE$^{O2}$ d'oxygène est opposé au deuxième collecteur d'entrée CE2$^{O2}$ d'oxygène vis-à-vis de la zone active, et donc du circuit de distribution cathodique.

La figure 4 gauche est une vue schématique et partielle, en coupe transversale, de l'empilement de cellules électrochimiques illustré sur la fig.3. La figure 4 droite illustre un exemple de variation de la température du fluide caloporteur dans le circuit de refroidissement des plaques bipolaires de la fig.4 gauche, ainsi qu'un exemple de variations de la concentration d'eau dans les fluides s'écoulant dans les circuits de distribution des plaques bipolaires.

Dans la cellule électrochimique C$_n$ formée des plaques bipolaires PB$_n$ et PB$_{n+1}$ et de la membrane électrolytique M$_n$, les fluides réactifs s'écoulent à contre-courant de part et d'autre de la membrane M$_n$ : l'hydrogène circule ici suivant la direction -X de CE1$^{H2}$ vers CS1$^{H2}$ dans le circuit de distribution anodique de la plaque bipolaire PB$_n$, et l'oxygène circule suivant la direction +X de CE2$^{O2}$ vers CS2$^{O2}$ dans le circuit de distribution cathodique de la plaque bipolaire PB$_{n+1}$.

La concentration d'eau dans les circuits de distribution augmente le long de l'écoulement. Ainsi, la concentration d'eau $c_w^{H2}(x)$ dans le fluide s'écoulant dans le circuit de distribution anodique de la plaque bipolaire $PB_n$ augmente progressivement suivant la direction -X, et la concentration d'eau $c_w^{O2}(x)$ dans le fluide s'écoulant dans le circuit de distribution cathodique de la plaque bipolaire $PB_{n+1}$ augmente progressivement suivant la direction +X.

A l'entrée de chaque circuit de distribution, le fluide réactif présente une valeur minimale de la concentration d'eau, par exemple une humidité relative de l'ordre de 50%, voire moins, par exemple inférieure ou égale à 30%, et présente une valeur supérieure à la valeur minimale en sortie du circuit de distribution, par exemple de l'ordre de 80% voire plus, par exemple 100%.

Notons que la variation de la concentration d'eau illustrée sur la fig.4 droite est évidemment très schématique. Elle est globalement croissante, mais n'est pas forcément linéaire comme illustré. Ainsi, elle est croissante sur une grande partie du circuit de distribution, et peut être légèrement décroissante ou constante à mesure que l'on s'approche de la sortie du circuit de distribution. Quoi qu'il en soit, la valeur de la concentration d'eau en sortie est plus élevée que la valeur en entrée.

Un gradient transversal de concentration $\Delta c$ est alors formé suivant l'axe vertical Z, en particulier à l'entrée et à la sortie de la zone active, qui génère un flux transverse d'eau $\varphi_{\Delta c}$ par diffusion au travers de la membrane $M_n$, orienté suivant la direction -Z du côté des collecteurs $CS1^{htf}$ et $CE2^{htf}$, et orienté suivant la direction +Z du côté des collecteurs $CE1^{htf}$ et $CS2^{htf}$. Ce flux transverse d'eau $\varphi_{\Delta c}$ permet d'humidifier l'oxygène en entrée du circuit cathodique et l'hydrogène en entrée du circuit cathodique, ce qui permet d'améliorer l'hydratation de la membrane $M_n$, en particulier à l'entrée et à la sortie de la zone active.

De plus, dans cette même cellule électrochimique $C_n$, le fluide caloporteur s'écoule suivant la direction -X dans le circuit de refroidissement de la plaque bipolaire $PB_n$ (de $CE1^{htf}$ jusqu'à $CS1^{htf}$), alors qu'il s'écoule suivant la direction +X dans le circuit de refroidissement de la plaque bipolaire $PB_{n+1}$ (de $CE2^{htf}$ jusqu'à $CS2^{htf}$). Ainsi, la température $T(x)$ augmente progressivement avec le sens d'écoulement, et est sensiblement maximale au collecteur $CS1^{htf}$ des plaques bipolaires de rang n pair $PB_n$, $PB_{n+2}$, $PB_{n+4}$... et au collecteur $CS2^{htf}$ des plaques bipolaires de rang n impair $PB_{n+1}$, $PB_{n+3}$, $PB_{n+5}$...

Comme ces deux collecteurs de sortie $CS1^{htf}$ et $CS2^{htd}$ sont opposés l'un à l'autre vis-à-vis de la zone active, un gradient transversal de température $\Delta T$ non nul est formé suivant l'axe Z, en particulier à l'entrée et sortie de la zone active, qui génère un deuxième flux transverse d'eau $\varphi_{\Delta T}$, par diffusion au travers de la membrane $M_n$ (l'eau diffuse vers la plaque bipolaire la plus froide). Ce flux transverse d'eau $\varphi_{\Delta T}$ est donc orienté suivant la direction -Z du côté des collecteurs $CS1^{htf}$ et $CE2^{htf}$, et est orienté suivant la direction +Z du côté des collecteurs $CE1^{htf}$ et $CS2^{htf}$. Il est donc orienté suivant la même direction que celle du flux transverse $\varphi_{\Delta c}$, ce qui permet d'humidifier davantage l'oxygène en entrée du circuit cathodique ainsi que l'hydrogène en entrée du circuit cathodique, et permet d'améliorer davantage l'hydratation de la membrane $M_n$ en particulier à l'entrée et à la sortie de la zone active.

Dans la mesure où il y a une alternance du sens d'écoulement du fluide caloporteur d'une plaque bipolaire à l'autre, ainsi qu'une alternance du sens d'écoulement de chaque fluide réactif d'une plaque bipolaire à l'autre, chaque cellule électrochimique présente un gradient transversal de température $\Delta T$ non nul à l'entrée et à la sortie de la zone active, qui génère un flux transverse d'eau $\varphi_{\Delta T}$ orienté suivant la même direction que le flux transverse d'eau $\varphi_{\Delta c}$. Ainsi, chaque cellule électrochimique présente une même amélioration de l'hydratation de la membrane électrolytique.

Comme indiqué précédemment, par ce flux transverse d'eau $\varphi_{\Delta T}$ d'origine thermique, on conserve une quantité d'eau plus importante dans chaque cellule électrochimique, ce qui permet d'humidifier davantage les fluides réactifs à l'entrée des circuits de distribution, et donc d'améliorer l'hydratation des membranes électrolytiques. On peut ainsi alimenter les circuits de distribution avec des fluides réactifs plus secs, et/ou faire fonctionner la pile à combustible à une température nominale de fonctionnement plus élevée (au moins égale à 80°C).

Dans le mode de réalisation de la fig.3 et de la fig.4, le flux transverse d'eau $\varphi_{\Delta T}$ est orienté, dans chaque cellule électrochimique, dans le même sens que le flux transverse d'eau $\varphi_{\Delta c}$. Cela provient du fait que, dans chaque plaque bipolaire de la cellule électrochimique, le fluide caloporteur s'écoule dans le même sens que le fluide réactif. Ainsi, dans la cellule $C_n$, le fluide caloporteur et l'hydrogène de la plaque bipolaire $PB_n$ s'écoulent suivant la direction -X, alors que le fluide caloporteur et l'oxygène de la plaque bipolaire $PB_{n+1}$ s'écoulent suivant la direction +X.

Il est toutefois possible de prévoir que, dans chaque plaque bipolaire de la cellule électrochimique, le fluide caloporteur s'écoule dans le sens opposé au fluide réactif. Cela peut permettre de provoquer un dénoyage des circuits de distribution dans l'hypothèse où la pile à combustible serait initialement noyée.

A ce titre, la figure 5 est une vue schématique et partielle, en perspective et en éclaté, d'un empilement de cellules électrochimiques d'une pile à combustible selon un mode de réalisation. La figure 6 gauche est une vue schématique et partielle, en coupe transversale, de l'empilement de cellules électrochimiques illustré sur la fig.5 ; et la figure 6 droite illustre un exemple de variation de la température du fluide caloporteur dans le circuit de refroidissement des plaques bipolaires de la fig.6 gauche, ainsi qu'un exemple de variations de la concentration d'eau dans les fluides s'écoulant dans les circuits de distribution des plaques bipolaires.

Comme indiqué précédemment, la pile à combustible diffère de celle de la fig.3 essentiellement en ce que, dans chaque plaque bipolaire de la cellule électrochimique, le fluide caloporteur s'écoule dans le sens opposé au fluide réactif. De plus, cette configuration est particulièrement avantageuse lorsque la pile à combustible se trouve initialement noyée, de sorte que la concentration d'eau en entrée des circuits de distribution est élevée et doit être diminuée.

Ainsi, dans la plaque bipolaire $PB_n$ de la cellule $C_n$, le fluide caloporteur s'écoule suivant la direction +X du collecteur $CE1^{htf}$ au collecteur $CS1^{htf}$, alors que l'hydrogène s'écoule dans le circuit de distribution anodique suivant la direction -X du collecteur $CE1^{H2}$ en direction du collecteur $CS1^{H2}$. En effet, le collecteur d'entrée $CE1^{htf}$ est opposé au collecteur d'entrée $CE1^{H2}$ vis-à-vis de la zone active.

De plus, dans la plaque bipolaire $PB_{n+1}$ de la même cellule $C_n$, le fluide caloporteur s'écoule suivant la direction -X du collecteur $CE2^{htf}$ au collecteur $CS2^{htf}$, alors que l'oxygène s'écoule dans le circuit de distribution cathodique suivant la direction +X du collecteur $CE2^{O2}$ en direction du collecteur $CS2^{O2}$. En effet, le collecteur d'entrée $CE2^{htf}$ est opposé au collecteur d'entrée $CE2^{O2}$ vis-à-vis de la zone active.

La pile à combustible étant initialement noyée, la concentration d'eau $c_w^{H2}$ à l'entrée du circuit de distribution anodique (collecteur $CE1^{H2}$) est particulièrement élevée, comme l'est la concentration d'eau $c_w^{O2}$ à la sortie du circuit de distribution cathodique (collecteur $CS2^{O2}$). Aussi, le gradient transversal de concentration $\Delta c$ y est faible, de sorte que le flux transverse d'eau $\varphi_{\Delta c}$ est faible également.

En revanche, le gradient transversal de température $\Delta T$ reste élevé, comme dans le cas de la fig.3. Il est ici orienté suivant la direction +Z, du côté des collecteurs $CE1^{H2}$ et $CS2^{O2}$, de sorte que le flux transversal d'eau $c_{p_{oT}}$ est orienté suivant la direction -Z (vers la plaque bipolaire la plus froide). Ainsi, l'eau présente à l'entrée du circuit de distribution anodique (vers le collecteur $CE1^{H2}$) diffuse au travers de la membrane vers la sortie du circuit de distribution cathodique (vers le collecteur $CS2^{O2}$). Ainsi, on réduit la concentration d'eau $c_w^{H2}$ à l'entrée du circuit de distribution anodique.

De même, le gradient transversal de température $\Delta T$ est ici orienté suivant la direction -Z, du côté des collecteurs $CS1^{H2}$ et $CE2^{O2}$, de sorte que le flux transversal d'eau $\varphi_{\Delta T}$ est orienté suivant la direction +Z (toujours vers la plaque bipolaire la plus froide). Ainsi, l'eau présente à l'entrée du circuit de distribution cathodique (vers le collecteur $CE2^{O2}$) diffuse au travers de la membrane vers l'entrée du circuit de distribution anodique (vers le collecteur $CS1^{H2}$). Ainsi, on réduit la concentration d'eau $c_w^{O2}$ à l'entrée du circuit de distribution cathodique.

Dans la mesure où il y a une alternance du sens d'écoulement du fluide caloporteur d'une plaque bipolaire à l'autre, ainsi qu'une alternance du sens d'écoulement de chaque fluide réactif, chaque cellule électrochimique présente un gradient transversal de température, qui génère un flux transverse d'eau $\varphi_{\Delta T}$ orienté de manière à réduire la concentration d'eau à l'entrée des circuits de distribution anodique et cathodique. Ainsi, chaque cellule électrochimique présente une même réduction locale de la concentration d'eau, conduisant ainsi à un dénoyage progressif de la pile à combustible.

Des modes de réalisation particuliers viennent d'être décrits. Différentes variantes et modifications apparaîtront à l'homme du métier.

## Revendications

1. Pile à combustible, comportant :

   ○ un empilement de N cellules électrochimiques $(C_{n=1;\,N})$, avec N>1 ;

   • chaque cellule électrochimique $(C_n)$ comportant une membrane électrolytique $(M_n)$ disposée entre deux plaques bipolaires $(PB_n; PB_{n+1})$ les plaques bipolaires successives étant identifiées par un rang n allant de 1 à N+1 ;
   • chaque plaque bipolaire $(PB_{n=1\,;N+1})$ comportant un circuit de distribution d'un fluide réactif comburant $(O_2)$, un circuit de distribution d'un fluide réactif combustible $(H_2)$, et un circuit de refroidissement d'un fluide caloporteur ;

   ○ des collecteurs d'entrée (CE) des fluides réactifs et du fluide caloporteur, et des collecteurs de sortie (CS) associés, les collecteurs d'entrée et de sortie traversant les plaques bipolaires et étant raccordés aux circuits de distribution et de refroidissement ;

   • les collecteurs d'entrée et de sortie étant agencés de sorte que, dans chaque cellule électrochimique, les fluides réactifs comburant $(O_2)$ et combustible $(H_2)$ s'écoulent à contre-courant de part et d'autre de la membrane électrolytique ;

   ○ **caractérisée en ce qu'**elle comprend :

   • des premier et deuxième collecteurs d'entrée $(CE1^{O2}\;;\;CE2^{O2})$ du fluide réactif comburant $(O_2)$, et des premier et deuxième collecteurs de sortie $(CS1^{O2}\;;\;CS2^{O2})$ associés ;

• des premier et deuxième collecteurs d'entrée (CE1$^{H2}$ ; CE2$^{H2}$) du fluide réactif combustible (H2), et des premier et deuxième collecteurs de sortie (CS1$^{H2}$ ; CS2$^{H2}$) associés ; et

• des premier et deuxième collecteurs d'entrée (CE1$^{htf}$ ; CE2$^{htf}$) du fluide caloporteur, et des premier et deuxième collecteurs de sortie (CS1$^{htf}$ ; CS2$^{htf}$) associés ;

■ les premiers collecteurs d'entrée (CE1$^{O2}$; CE1$^{H2}$ ; CE1$^{htf}$) alimentant uniquement les plaques bipolaires de rang n impair ; et les deuxièmes collecteurs d'entrée (CE2$^{O2}$; CE2$^{H2}$ ; CE2$^{htf}$) alimentant uniquement les plaques bipolaires de rang n pair ;

■ dans chaque plaque bipolaire (BP$_{n=1\ ;N+1}$) : les premier et deuxième collecteurs d'entrée (CE1$^{htf}$; CE2$^{htf}$) du fluide caloporteur sont opposés l'un à l'autre vis-à-vis du circuit de refroidissement, de sorte qu'il y a une alternance du sens d'écoulement du fluide caloporteur d'une plaque bipolaire à l'autre ;

■ dans chaque plaque bipolaire (BP$_{n=1;N+1}$) : les premier et deuxième collecteurs d'entrée (CE1$^{O2}$; CE2$^{O2}$) du fluide réactif comburant (O$_2$) sont opposés l'un à l'autre vis-à-vis du circuit de distribution, et les premier et deuxième collecteurs d'entrée (CE1$^{H2}$; CE2$^{H2}$) du fluide réactif combustible (H$_2$) sont opposés l'un à l'autre vis-à-vis du circuit de distribution, de sorte qu'il y a une alternance du sens d'écoulement de chaque fluide réactif d'une plaque bipolaire à l'autre.

2. Pile à combustible selon la revendication 1, dans laquelle, dans chaque plaque bipolaire (PB$_{n=1;N+1}$), le premier collecteur d'entrée (CE1$^{H2}$) du fluide combustible est opposé au deuxième collecteur d'entrée (CE2$^{O2}$) du fluide comburant vis-à-vis des circuits de distribution.

3. Pile à combustible selon la revendication 1 ou 1, dans laquelle, dans chaque plaque bipolaire (PB$_{n=1;N+1}$), les premiers collecteurs d'entrée (CE1$^{O2}$; CE1$^{H2}$) des fluides réactifs sont opposés aux deuxièmes collecteurs d'entrée (CE2$^{O2}$; CE2$^{H2}$) des fluides réactifs vis-à-vis des circuits de distribution.

4. Pile à combustible selon la revendication 3, dans laquelle le premier collecteur d'entrée (CE1$^{htf}$) du fluide caloporteur est situé du même côté que les premiers collecteurs d'entrée (CE1$^{O2}$; CE1$^{H2}$) des fluides réactifs, le deuxième collecteur d'entrée (CE2$^{htf}$) du fluide caloporteur étant situé du même côté que les deuxièmes collecteurs d'entrée (CE2$^{O2}$; CE2$^{H2}$) des fluides réactifs, de sorte que les premier et deuxième collecteurs d'entrée (CE1$^{htf}$ ; CE2$^{htf}$) du fluide caloporteur sont opposés l'un à l'autre vis-à-vis du circuit de refroidissement.

5. Pile à combustible selon la revendication 3, dans laquelle le premier collecteur d'entrée (CE1$^{htf}$) du fluide caloporteur est situé du même côté que les deuxièmes collecteurs d'entrée (CE2$^{O2}$; CE2$^{H2}$) des fluides réactifs, le deuxième collecteur d'entrée (CE2$^{htf}$) du fluide caloporteur étant situé du même côté que les premiers collecteurs d'entrée (CE1$^{O2}$; CE1$^{H2}$) des fluides réactifs, de sorte que les premier et deuxième collecteurs d'entrée (CE1$^{htf}$ ; CE2$^{htf}$) du fluide caloporteur sont opposés l'un à l'autre vis-à-vis du circuit de refroidissement.

6. Pile à combustible selon l'une quelconque des revendications 1 à 5, dans laquelle chaque membrane électrolytique est une membrane échangeuse de protons ou une membrane échangeuse d'anions.

7. Procédé d'utilisation de la pile à combustible selon l'une quelconque des revendications précédentes, dans lequel une température nominale de fonctionnement des cellules électrochimiques est supérieure ou égale à 80°C.

8. Procédé d'utilisation selon la revendication précédentes, dans lequel les fluides réactifs introduits dans les circuits de distribution présentent une humidité relative inférieure ou égale à 30%.

**Fig.1**

EP 4 576 280 A1

**Fig.2**

**Fig.3**

Fig.4

CS1$^{O2}$
CE2$^{O2}$
CE1$^{htf}$
CS2$^{htf}$
CS1$^{H2}$
CE2$^{H2}$

H2  htf  O2

O2  htf  H2

PB$_n$

CE1$^{H2}$
CS2$^{H2}$
CS1$^{htf}$
CE2$^{htf}$
CE1$^{O2}$
CS2$^{O2}$

C$_n$

M$_n$

CS1$^{O2}$
CE2$^{O2}$
CE1$^{htf}$
CS2$^{htf}$
CS1$^{H2}$
CE2$^{H2}$

PB$_{n+1}$

CE1$^{H2}$
CS2$^{H2}$
CS1$^{htf}$
CE2$^{htf}$
CE1$^{O2}$
CS2$^{O2}$

C$_{n+1}$

M$_{n+1}$

CS1$^{O2}$
CE2$^{O2}$
CE1$^{htf}$
CS2$^{htf}$
CS1$^{H2}$
CE2$^{H2}$

PB$_{n+2}$

CE1$^{H2}$
CS2$^{H2}$
CS1$^{htf}$
CE2$^{htf}$
CE1$^{O2}$
CS2$^{O2}$

Z
Y
X

**Fig.5**

**Fig.6**

Europäisches
Patentamt

European
Patent Office

Office européen
des brevets

# RAPPORT DE RECHERCHE EUROPEENNE

**Numéro de la demande**

EP 24 22 0347

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2004/038114 A1 (WARIISHI YOSHINORI [JP] ET AL) 26 février 2004 (2004-02-26) * alinéas [0013] - [0016], [0040] - [0042]; figures 6,8-12 * | 1-8 | INV. H01M8/0267 H01M8/04029 H01M8/04089 H01M8/241 |
| A | EP 1 371 107 B1 (HONDA MOTOR CO LTD [JP]) 2 septembre 2009 (2009-09-02) * figure 16 * * alinéas [0091] - [0095] * | 1-8 | H01M8/2483 ADD. H01M8/10 |
| A | US 2002/146601 A1 (SUGIURA SEIJI [JP] ET AL) 10 octobre 2002 (2002-10-10) * figure 15 * * alinéas [0085] - [0090] * | 1-8 | |

**DOMAINES TECHNIQUES RECHERCHES (IPC)**

H01M

Le présent rapport a été établi pour toutes les revendications

| Lieu de la recherche | Date d'achèvement de la recherche | Examinateur |
|---|---|---|
| Munich | 10 janvier 2025 | Jacquinot, Patrick |

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 22 0347

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-01-2025

| Document brevet cité au rapport de recherche | Date de publication | Membre(s) de la famille de brevet(s) | | Date de publication |
|---|---|---|---|---|
| US 2004038114 A1 | 26-02-2004 | DE | 10337232 A1 | 25-03-2004 |
| | | JP | 3792625 B2 | 05-07-2006 |
| | | JP | 2004079431 A | 11-03-2004 |
| | | US | 2004038114 A1 | 26-02-2004 |
| EP 1371107 B1 | 02-09-2009 | AT | E441945 T1 | 15-09-2009 |
| | | AU | 2002234964 B2 | 01-09-2005 |
| | | CA | 2439816 A1 | 12-09-2002 |
| | | CN | 1503998 A | 09-06-2004 |
| | | EP | 1371107 A2 | 17-12-2003 |
| | | JP | 4516229 B2 | 04-08-2010 |
| | | JP | 2002260710 A | 13-09-2002 |
| | | KR | 20030081502 A | 17-10-2003 |
| | | TW | 575978 B | 11-02-2004 |
| | | US | 2004137298 A1 | 15-07-2004 |
| | | WO | 02071526 A2 | 12-09-2002 |
| US 2002146601 A1 | 10-10-2002 | CA | 2374466 A1 | 06-09-2002 |
| | | EP | 1239530 A2 | 11-09-2002 |
| | | JP | 4344484 B2 | 14-10-2009 |
| | | JP | 2002260689 A | 13-09-2002 |
| | | TW | 552737 B | 11-09-2003 |
| | | US | 2002146601 A1 | 10-10-2002 |

EPO FORM P0460

Pour tout renseignement concernant cette annexe : voir Journal Officiel de l'Office européen des brevets, No.12/82